# EUROPEAN PATENT APPLICATION

(11) **EP 4 620 557 A1**
(43) Date of publication of application: **24.09.2025**
(21) Application number: 24164924.3
(22) Date of filing: 20.03.2024
(51) Int. Cl.: B01D 53/04, B01D 53/26

(54) **AIR DRYER CARTRIDGE, MOLDED PIECE FOR AN AIR DRYER, AIR DRYER, VEHICLE, AND METHOD OF MANUFACTURING AN AIR DRYER CARTRIDGE**

(71) Applicant: ZF CV Systems Europe BV, 1170 Brüssel (BE)
(72) Inventor: Olszewski, Jakub, 50-513 Wroclaw (PL)
(74) Representative: Copi, Joachim

(57) **Abstract**

An air dryer cartridge (10) comprises a base plate (12). The base plate (12) is configured for affixing the air dryer cartridge (10) to an air dryer body. The base plate (12) comprises a plastic plate (50) comprising a central passage (60) and a tubular metal insert (40) received in the central passage (60).

## Description

The invention relates to an air dryer cartridge for a vehicle, such as a commercial vehicle. The invention relates in particular to a base plate of an air dryer cartridge, which base plate provides a mechanical interface and a pneumatic interface with an air dryer body.

Pneumatic systems are used on vehicles in a wide variety of applications, including gas supply systems, air dryer systems, pneumatic suspension, pneumatic levelling, and/or braking systems. Often, pneumatic systems are configured in such a way that a compressor has an intake configured to suck in ambient air and to compress the air to provide pressure gas for use by one or several pneumatic consumers. To reduce the risk of pneumatic consumer degradation caused by humidity in the compressed air, the pneumatic system may comprise an air dryer. An air dryer generally comprises a desiccant in a desiccant container. The desiccant container is arranged in an air dryer cartridge that can be assembled with an air dryer body.

An air dryer cartridge comprises a base plate that provides a mechanical and pneumatic interface to the air dryer body. Typically, the base plate is formed as a metal base plate machined to provide the desired functions of providing both a mechanical interface and a pneumatic interface to the air dryer body. Such a metal base plate is complex to manufacture, adding to the costs and complexity of the manufacturing process. The metal base plate may also undesirably add to the weight of the air dryer cartridge and, thus, to the vehicle, which is undesirable in view of objectives of reducing weight and, thus, fuel consumption to reduce carbon footprint.

There is a need in the art for an improved air dryer cartridge and components of such an air dryer cartridge. There is in particular a need for an air dryer cartridge that provides reduced weight, as compared to a conventional air dryer cartridge, and that reduces manufacturing complexity.

The problem underlying the invention resides in addressing the need for an improved air dryer cartridge and components of such an air dryer cartridge, which reduce weight and manufacturing complexity, as compared to conventional air dryer cartridge constructions, while allowing the air dryer cartridge to be securely affixed to an air dryer body. The invention also addresses the need for an air dryer, molded piece, vehicle, and method useful in association with such an air dryer cartridge.

According to aspects of the invention, an air dryer cartridge, a molded piece, an air dryer, a vehicle, and a method of manufacturing an air dryer cartridge are provided. The dependent claims define embodiments.

According to an aspect of the invention, an air dryer cartridge is provided. The air dryer cartridge comprises a desiccant and a base plate. The base plate comprise a fixing structure configured to affix the air dryer cartridge on an air dryer body, and air flow passages configured to provide an air flow path between the air dryer body and the desiccant. The base plate comprises a plastic plate comprising a central passage and a tubular metal insert received in the central passage, wherein the fixing structure comprises the tubular metal insert.

Various effects are attained by the air dryer cartridge. The base plate comprising a metal insert received in the central passage of the plastic plate reduces both air dryer cartridge weight and manufacturing complexity of the base plate. At least portions of the base plate that would conventionally be manufactured from metal are replaced by the plastic plate, leading to a reduced weight as compared to a metal base plate having the same dimensions. The tubular metal insert allows the air dryer cartridge to be affixed to the air dryer body so as to reliably secure the air dryer cartridge. The base plate can be manufactured easily, by techniques such as overmolding the plastic plate on the tubular metal insert or ultrasonic welding, without being limited thereto.

The tubular metal insert may comprise an internal thread.

Thereby, the air dryer cartridge is configured such that it can be threaded onto a mating external thread of the air dryer body. The air dryer cartridge can be affixed to and disengaged from the air dryer body in a destruction-free reversible manner, allowing repeated engagement and disengagement of the air dryer cartridge and the air dryer body.

The tubular metal insert may comprise an outer insert surface comprising at least one structured portion spaced from the internal thread.

Thereby, the tubular metal insert has a structure that allows it to be secured to the plastic plate in a particularly reliable manner.

The plastic plate may be overmolded on the tubular metal insert.

Thereby, the base plate can be manufactured efficiently using an overmolding process. The weight benefits, i.e., reduced weight as compared to a base plate consisting of metal, are maintained thereby.

The base plate may comprises an ultrasonic weld interface between the tubular metal insert and the plastic plate.

Thereby, the base plate can be manufactured efficiently by forming the plastic plate in a molding process and joining the tubular metal insert and the plastic plate by ultrasonic welding. The weight benefits, i.e., the reduced weight as compared to a base plate consisting of metal, are maintained thereby.

The plastic plate may be a molded piece.

Thereby, the base plate can be manufactured efficiently using a molding process, which may but does not need to be an overmolding process. The weight benefits, i.e., the reduced weight as compared to a base plate consisting of metal, are maintained thereby.

The plastic plate may comprise a central tubular portion extending coaxially with the tubular metal insert and comprising the central passage.

Thereby, the plastic plate has a securement interface to which the tubular metal insert can be secured in a reliable manner. This contributes to ensuring the intended functionality of the base plate, i.e., the provision of a mechanical and pneumatic interface to the air dryer body, while providing reduced weight as compared to conventional base plate configurations in which the base plate in its entirety is made of metal.

The central tubular portion may comprise an axial end that is flush with an axial end face of the tubular metal insert.

Thereby, the plastic plate has a securement interface that provides secure attachment of the tubular metal insert and the plastic plate, ensuring the intended functionality of the base plate while providing reduced weight as compared to conventional base plate configurations.

The plastic plate may comprise an outer annular ring portion extending in a plane perpendicular to a center axis of the central tubular portion.

Thereby, the plastic plate is operative to provide an axial end face of the air dryer cartridge.

The outer annular ring portion may comprise an outer rim. The air dryer cartridge may comprise a cap that abuts on the outer rim along an entire outer circumference of the plastic plate.

Thereby, the plastic plate is operative to provide an axial end closure of the cap of the air dryer cartridge.

The plastic plate may comprise a transition portion extending from the outer annular ring portion to the central tubular portion, the transition portion comprising at least one section that is inclined or curved relative to the plane perpendicular to the center axis of the central tubular portion, the transition portion comprising at least one of the air flow passages.

Thereby, the plastic plate has a configuration that ensures the intended functionality of the base plate, which is providing a mechanical and pneumatic interface to the air dryer body, while providing a reduced weight as compared to conventional base plate configurations in which the base plate is entirely formed of metal.

The air dryer cartridge may further comprise a desiccant container defining a receptacle in which the desiccant is contained. The air dryer cartridge may further comprise a seal (such as an O-ring seal) sandwiched between the desiccant container and the plastic plate.

Thereby, the desiccant container and the base plate can be formed as separate pieces and assembled with each other to manufacture the air dryer cartridge.

The plastic plate may be comprised by a molded piece that is formed of a plastic material. The molded piece may further comprise a tubular container wall integral with the plastic plate to define a receptacle in which the desiccant is contained. The molded piece may comprise both the desiccant container and the plastic plate. In other words, in such a configuration, there is provided an air dryer cartridge comprising a molded piece, wherein the molded piece comprises a desiccant container portion and a plastic plate integrally formed with the desiccant container portion. The desiccant container portion defines a receptacle in which the desiccant is received. The plastic plate comprises a central passage. The plastic plate comprises at least one additional air flow passage. The air dryer cartridge comprises a tubular metal insert received in and secured to the central passage. Thus, the plastic plate of the molded piece in combination with the tubular metal insert joined to the plastic plate provide both a fixing structure for fixing the air dryer cartridge to the air dryer body and a pneumatic interface of the air dryer cartridge to the air dryer body. The molded piece in combination with the tubular metal insert joined to the plastic plate provide both the desiccant container and the base plate of the air dryer cartridge.

Thereby, the air dryer cartridge provides ease of assembly. The air dryer cartridge may be configured such that there is no O-ring seal and/or no seal at all interposed between the plastic plate and the desiccant container portion. This provides a further reduction in weight and manufacturing complexity.

The molded piece may be overmolded onto the tubular metal insert.

Thereby, the desiccant container and the base plate of the air dryer cartridge can be manufactured efficiently using an overmolding process. A reduced weight as compared to a base plate consisting of metal is attained.

The plastic plate of the molded piece may comprises an ultrasonic weld interface between the tubular metal insert and the plastic plate.

Thereby, the desiccant container and the base plate of the air dryer cartridge can be manufactured efficiently by forming the molded piece in a molding process and joining the tubular metal insert and the molded piece by ultrasonic welding. A reduced weight as compared to a base plate consisting of metal is attained.

According to another aspect of the invention there is provided a molded piece for an air dryer cartridge. The molded piece may be formed of a plastic material and may comprise a desiccant container portion comprising an end wall and a tubular container wall extending around a desiccant container axis, a plastic plate extending transverse to the desiccant container axis and configured to pneumatically interface with an air dryer body, the plastic plate comprising a central passage for receiving a tubular metal insert.

Various effects and advantages are attained by the molded piece. The molded piece incorporates both the desiccant container of an air dryer cartridge (as desiccant container portion of the molded piece) and part of a base plate of the air dryer cartridge. The molded piece can be combined with the tubular metal insert (e.g., by overmolding the molded piece onto the tubular metal insert or by joining the molded piece and the tubular metal insert by ultrasonic welding) to provide both the desiccant container of an air dryer cartridge and the base plate of the air dryer cartridge.

Optional features of the molded piece and the effects attained thereby corresponds to the features and effects discussed in association with the air dryer cartridge. In particular, the plastic place comprised by the molded piece and/or the tubular metal insert may have any of the geometrical and/or functional characteristics discussed in association with the air dryer cartridge.

According to a further aspect, there is provided an air dryer, comprising an air dryer body and the air dryer cartridge according to an aspect or embodiment. The air dryer cartridge is mounted to the air dryer body.

Various effects and advantages are associated with the air dryer. The air dryer provides reduced weight and ease of manufacture, which are caused by the reduced weight and ease of manufacture of the air dryer cartridge.

The air dryer may be a dual air dryer, comprising a further air dryer cartridge according to an aspect or embodiment mounted to the air dryer body. The air dryer body may comprise a switching valve switchable to select one of the air dryer cartridge and the further air dryer cartridge for drying air in pumping mode operation and/or for regeneration in regeneration mode operation.

Thereby, the effects discussed in association with the air dryer cartridge are realized in association with a dual air dryer.

According to a further aspect, there is provided a pneumatic system for a vehicle, in particular for a commercial vehicle, comprising a compressor, the air dryer according to an aspect or embodiment, and a fluid connection directly connected to the compressor and the air dryer.

Thereby, the effects and advantages provided by the air dryer cartridge and the air dryer are utilized in a pneumatic system of a vehicle, such as a commercial vehicle.

The pneumatic system may comprise any one or any combination of: an air supply system; a pneumatic levelling system; an electropneumatic levelling system; a pneumatic braking system; an electropneumatic braking system; a parking brake system; a sensor cleaning system, without being limited thereto.

Thereby, the effects and advantages of an air dryer cartridge having reduced weight and reduced manufacturing complexity provide improvements of pneumatic systems for vehicles.

According to another aspect, there is provided a vehicle, e.g., a commercial vehicle, comprising the air dryer cartridge, the molded piece, the air dryer, and/or pneumatic system according to an aspect or embodiment.

Thereby, a commercial vehicle is provided in which the effects and advantages of the air dryer cartridge or its components are used.

According to a further aspect of the invention, there is provided a method of manufacturing an air dryer cartridge, the method comprising: manufacturing a base plate of the air dryer cartridge, comprising molding a plastic plate comprising a central passage, wherein the plastic plate comprises air flow passages configured to provide an air flow path between the air dryer body and the desiccant, and wherein a tubular metal insert is secured in the central passage; and assembling the base plate to form the air dryer cartridge.

Various effects are attained by the method of manufacturing the air dryer cartridge. The method is operative to provide a base plate of the air dryer cartridge in an efficient manner, with the base plate providing a reduced weight compared to base plate configuration formed completely of metal. The tubular metal insert allows the air dryer cartridge to be affixed to the air dryer body to reliably secure the air dryer cartridge. The base plate can be manufactured efficiently, by techniques such as overmolding the plastic plate on the tubular metal insert or ultrasonic welding, without being limited thereto.

The method of manufacturing the air dryer cartridge may be a method of manufacturing the air dryer cartridge according to any aspect or embodiment.

Molding the plastic plate may comprises overmolding the plastic plate on the tubular metal insert.

Thereby, a base plate of the air dryer cartridge can be manufactured efficiently using an overmolding process. The weight benefits, i.e., reduced weight as compared to a base plate consisting of metal, are maintained thereby.

The method may further comprise performing an ultrasonic welding process to secure the tubular metal insert in the central passage of the plastic plate.

Thereby, the base plate can be manufactured efficiently by forming the plastic plate in a molding process and joining the tubular metal insert and the plastic plate by ultrasonic welding. The weight benefits, i.e., the reduced weight as compared to a base plate consisting of metal, are maintained thereby.

Molding the plastic plate may comprise molding the plastic plate as a plastic plate of a molded piece formed of a plastic material, wherein the method of manufacturing the air dryer cartridge comprises molding the molded piece such that the molded piece comprises a desiccant container portion and the plastic plate, wherein the desiccant container portion comprises a cylindrical wall extending around a desiccant container axis and wherein the plastic plate extends transverse to the desiccant container axis, the plastic plate being comprising a central passage for receiving the tubular metal insert.

Thereby, the air dryer cartridge can be manufactured in a particularly efficient manner.

Molding the molded piece may comprise overmolding the molded piece over the tubular metal insert.

Thereby, both the desiccant container and the base plate of the air dryer cartridge can be manufactured efficiently using an overmolding process. The weight benefits, i.e., reduced weight as compared to a base plate consisting of metal, are maintained thereby.

According to a further aspect of the invention, there is provided a method of assembling a pneumatic system of a vehicle, comprising threadingly engaging the threaded metal insert with an air dryer body.

Various effects and advantages are associated with the method of assembling the pneumatic system. The air dryer cartridge provides reduced weight, which in turn provides a weight reduction for the pneumatic system, and can be manufactured efficiently, which in turns reduced the overall complexity of the manufacturing process.

The method may further comprise establishing a fluid connection between a compressor and the air dryer body, and establishing a further fluid connection between the air dryer body and at least one pneumatic consumer of a vehicle (e.g., of a commercial vehicle).

Thereby, the effects and advantages of the air dryer cartridge are attained in a pneumatic system of a vehicle. The pneumatic consumer may be a pneumatic consumer of any one, or any combination of: an air supply system; a pneumatic levelling system; an electropneumatic levelling system; a pneumatic braking system; an electropneumatic braking system; a parking brake system; a sensor cleaning system, without being limited thereto.

Optional features of the manufacturing and assembly methods and the effects attained thereby correspond to the optional features and effects discussed in association with the air dryer cartridge, the molded piece, the air dryer, the pneumatic system for a vehicle, and the vehicle.

According to another aspect, there is provided a method of providing gas to a pneumatic consumer of a vehicle (e.g., of a commercial vehicle). The method comprises receiving a gas flow by an air dryer, wherein the air dryer comprises the air dryer cartridge according to an aspect or embodiment, and passing, in pumping mode operation, the gas flow through the air flow passages of the base plate and through the desiccant of the air dryer cartridge.

Various effects are attained by the method of providing gas to a pneumatic consumer. The air dryer cartridge provides weight reduction as compared to an air dryer cartridge having a base plate made entirely of metal. Thus, an air dyer that provides weight reduction is utilized to provide gas to the pneumatic consumer.

Further embodiments and configurations are defined by the dependent claims. These and other aspects of the invention will be apparent from and further explained with reference to the embodiments described herein with reference to the accompanying drawings, in which:
Fig. 1 is a cross-sectional view of an air dryer cartridge according to an embodiment of the invention;
Fig. 2 is a cross-sectional view of a base plate of the air dryer cartridge of Fig. 1;
Fig. 3 shows a side view of a tubular metal insert of the air dryer cartridge according to an embodiment of the invention;
Fig. 4 is a partial cross-sectional view of a base plate of the air dryer cartridge according to an embodiment of the invention;
Fig. 5 is a partial cross-sectional view of a base plate of the air dryer cartridge according to an embodiment of the invention;
Fig. 6 is a cross-sectional view of a molded piece of the air dryer cartridge according to an embodiment of the invention;
Fig. 7 is a cross-sectional view of a molded piece of the air dryer cartridge according to an embodiment of the invention;
Fig. 8 is a schematic representation of a pneumatic system for a vehicle comprising an air dryer according to an embodiment;
Fig. 9 is a schematic representation of a pneumatic system for a vehicle comprising an air dryer according to an embodiment;
Fig. 10 is a schematic representation of a pneumatic system for a vehicle configured as a pneumatic or electropneumatic braking system comprising the air dryer according to an embodiment;
Fig. 11 is a schematic representation of a pneumatic system for a vehicle configured as a levelling system comprising the air dryer according to an embodiment;
Fig. 12 is a schematic representation of a pneumatic system for a vehicle configured as a gas spring system comprising the air dryer according to an embodiment;
Fig. 13 is a schematic representation of a commercial vehicle;
Fig. 14 is a flow chart of a manufacturing method according to an embodiment;
Fig. 15 is a flow chart of a manufacturing method according to an embodiment;
Fig. 16 is a flow chart of a manufacturing method according to an embodiment;
Fig. 17 is a flow chart of a manufacturing method according to an embodiment; and
Fig. 18 is a flow chart of a method of supplying gas.

Embodiments of the invention will be described with reference to the drawings. In the drawings, elements with similar or identical configuration and/or function are designated with similar or identical reference signs.

The invention relates to a component of an air dryer and, more specifically, to an air dryer cartridge. The invention relates in particular to configurations of air dryer cartridge components, such as a base plate of the air dryer cartridge and/or a desiccant container and the base plate.

As used herein, the term "air dryer cartridge" refers to a component comprising a desiccant and configured to reduce air humidity of compressed air provided by a compressor. The air dryer cartridge may be configured to be engaged with and disengaged from an air dryer body in a reversible destruction-free manner. The air dryer cartridge comprises a base plate configured to provide a mechanical and pneumatic interface to the air dryer body.

As used herein, the term "desiccant container" refers to the container that is configured to contain the desiccant therein, with the desiccant being in direct contact with the desiccant container. Such a desiccant container is also referred to as inner container, inner housing, or inner pot of an air dryer cartridge. The desiccant container is positioned in a housing of the air dryer cartridge. A gas flow path may be defined between the desiccant container and the housing.

As used herein, the term "tubular" refers to a structure that extends circumferentially around an axis. The tubular structure may comprise cylindrical, frustoconical, or other surfaces. The term "tubular" is not limited to an elliptical or circular cylinder structure, but encompasses additional structures as long as they include a circumferentially extending wall, e.g., around an axis of the silencer fitting element.

As used herein, the term "plate" refers to a component that extends along a plane, without necessarily requiring the component to have a planar configuration and/or to have a constant thickness. The skilled person is well aware of the fact that, in the pertinent field of the art, the term base plate refers, for example, to a component that extends transverse to a desiccant container axis, but which can have a non-planar configuration.

As used herein, the term "desiccant container axis" refers to an axis around which a circumferential outer wall portion (in particular an air-impermeable outer wall portion) of the desiccant container extends circumferentially.

As used herein, the term "pumping mode operation" refers to operation in which the air dryer cartridge is operative to receive a gas flow generated by a compressor and provide the gas flow with reduced humidity for use by at least one pneumatic consumer or a pneumatic consumer system that comprises one or several pneumatic consumers. The air dryer and/or the air dryer cartridge may also be operative for "regeneration mode operation" in which a gas flow through the air dryer cartridge may generally be inverse as compared to the pumping mode operation. The terms gas inlet and gas outlet as used herein are used with reference to the pumping mode operation.

As used herein, the term "gas" encompasses a gaseous mixture, such as air, without being limited thereto.

As used herein, the term "pneumatic" component encompasses an electropneumatic component, and the term "pneumatic" system encompasses an electropneumatic system.

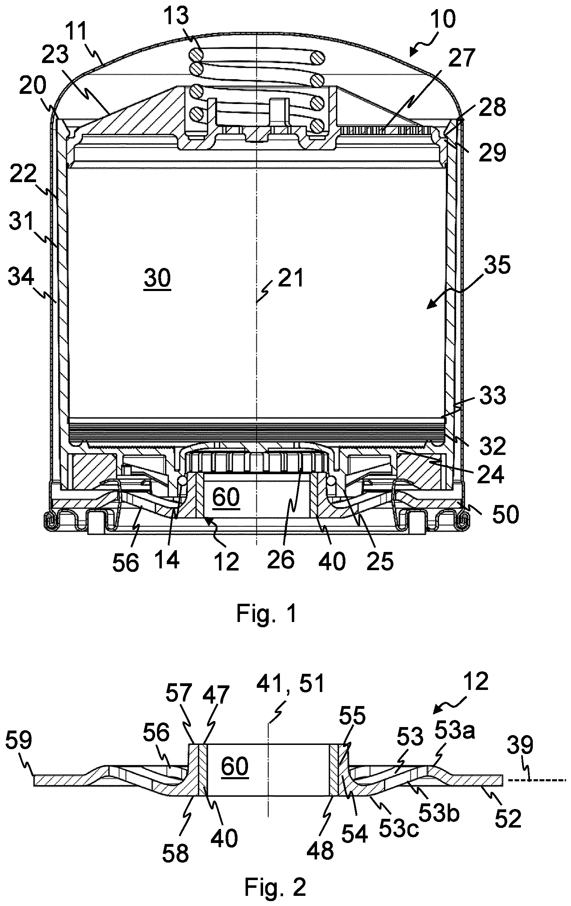

Fig. 1 is a cross-sectional view of an air dryer cartridge 10 according to an embodiment of the invention, which comprises a base plate 12. Fig. 2 is a cross-sectional view of the base plate 12. The viewing direction in Fig. 1 and Fig. 2 is perpendicular to a desiccant container axis 21 of the air dryer cartridge 10. The air dryer cartridge 10 comprises a housing 11, 12 which comprises an outer cap 11, such as a dome-shaped outer cap 11, and the base plate 12 engaged with the outer cap 11. The housing accommodates a desiccant container 20 in which a desiccant 30 is arranged.

The base plate 12 is configured such that it provides both a mechanical interface and a pneumatic interface of the air dryer cartridge 10 to an air dryer body. The base plate 12 comprises a plastic plate 50 and a tubular metal insert 40. The tubular metal insert 40 is secured in a central passage 60 of the plastic plate 50. The plastic plate 50 is configured such that the central passage 60 extends continuously between the opposing major surfaces of the plastic plate 50. The plastic plate 50 may be a molded piece. The plastic plate 50 and the tubular metal insert 40 may be secured to each other in various ways, such as by overmolding the plastic plate 50 onto the tubular metal insert 40, by ultrasonic welding, or by other techniques that may use, for example, an adhesive material, without being limited thereto. In order to provide the pneumatic interface between the air dryer body and the air dryer cartridge 10, which allows gas to be passed between the air dryer body and the desiccant 30 in a receptacle 35 of the air dryer cartridge 10, the plastic plate 50 comprises a plurality of air flow passages 56. The plurality of air flow passages 56 may be distributed circumferentially around a center axis 51 of a central tubular portion 54 of the plastic plate. To provide the desired mechanical interface function of allowing the air dryer cartridge 10 to be secured to the air dryer body, the base plate 12 comprises the tubular metal insert 40. The tubular metal insert 40 may have an internal thread configured for threaded engagement with a mating external thread of the air dryer body. The tubular metal insert 40 is configured to provide a fixing means for securely attaching the air dryer cartridge 10 to the air dryer body. The base plate 12 formed of the plastic plate 50 and the tubular metal insert 40 may be configured such that the air dryer cartridge 10 can be affixed to and removed from the air dryer body in a destruction-free reversible manner, i.e., without causing damage to the air dryer cartridge 10 or the air dryer body, and so as to enable repeated engagement and disengagement between the air dryer cartridge 10 and the air dryer body.

Thus, the base plate 12 has a configuration in which it is formed from the plastic plate 50 and the tubular metal insert 40. This provides weight advantages, in particular a reduced weight, as compared to a base plate 12 formed entirely of a metal. Moreover, manufacturing complexity is reduced as compared to a base plate 12 that is formed entirely of a metal, i.e., which consists of metal. The plastic plate 50 may be performed to have a geometrical shape that is adapted to a geometry of the air dryer body on which the air dryer cartridge 10 is to be mounted.

Referring to Fig. 2, the plastic plate 50 may have a non-planar configuration. The plastic plate 50 may comprise the central tubular portion 54, which has a cylindrical inner surface 55. The cylindrical inner surface 55 may be in direct abutment on an outer surface of the tubular metal insert 40, with the outer surface of the tubular metal insert 40 being the surface further away from an insert center axis 41. The air dryer cartridge 10 is configured such that the desiccant container axis 21, the insert center axis 41 and the center axis 51 of the central tubular portion 54 of the plastic plate 50 are coaxially aligned with each other.

The central tubular portion 54 of the plastic plate 50 extends along the center axis 51 of the central tubular portion 54 from a first axial end 57 of the central tubular portion 54 to a second axial end 58 of the central tubular portion 54. At least one of the first axial end 57 and the second axial end 58 of the central tubular portion 54 may be flush with (i.e., located in a same plane as) at least one axial end 47, 48 of the tubular metal insert 40. In the illustrated configuration, the tubular metal insert 40 extends from a first axial end 47 of the tubular metal insert 40 to a second axial end 48 of the tubular metal insert 40. The plastic plate 50 may be configured such that the first axial end 57 of the central tubular portion 54 is flush with the first axial end 47 of the tubular metal insert 40 and/or that the second axial end 58 of the central tubular portion 54 is flush with the second axial end 48 of the tubular metal insert 40.

The plastic plate 50 generally extends along an extension plane 39. The extension plane 39 is transverse, for example perpendicular, to the desiccant container axis 21, the insert center axis 41, and the center axis 51 of the central tubular portion 54 of the plastic plate 50. The plastic plate 50 may comprise an outer annular ring portion 52. The outer annular ring portion 52 may be planar. The outer annular ring portion 52 may have a thickness, measured in a direction parallel to the center axis 51 of the central tubular portion 54, which is substantially the same (e.g., within ±20 %, or within +/-10 %, or within ±5 %, or within manufacturing tolerances) as a thickness of the central tubular portion 54 measured in a direction perpendicular to the center axis 51 of the central tubular portion 54.

The outer annular ring portion 52 comprises an outer rim 59, which extends between the major faces of the plastic plate 50. The outer rim 59 may be a minor surface of the plastic plate 50 that extends continuously around the center axis 51 of the central tubular portion 54. In the installed state, the cap 11 may abut on the outer rim 59 along the entire circumference of the plastic plate 50.

The plastic plate 50 may comprise a transition portion 53 extending between and interconnecting the annular portion 52 and the central tubular portion 54 of the plastic plate 50. The transition portion 53 may, but does not need to be planar. The transition portion 53 may comprise several of the air flow passages 56 formed therethrough. The transition portion 53 may comprise at least sections that are curved and/or inclined relative to the extension plane 39 of the outer annular portion 52. For illustration, the transition portion 53 may comprise an inclined section 53b, which is inclined relative to the extension plane 39 in a radial direction. The transition portion 53 may comprise a curved section 53a interconnecting the inclined section 53b and the outer annular portion 52. The transition portion 53 may comprise a further curved section 53c interconnecting the inclined section 53b and the central tubular portion 54. Such a configuration facilitates a desired air flow pattern to be established in the air dryer cartridge 10 and/or interfacing the air dryer cartridge 10 with the air dryer body, while maintaining the effects of weight reduction and reduced manufacturing complexity as compared to a base plate 12 made entirely of metal.

The air dryer cartridge 10 may comprise fasteners that extend through at least some of the air flow passages 56 in the plastic plate 50 to secure the base plate 12 on the outer cap 11.

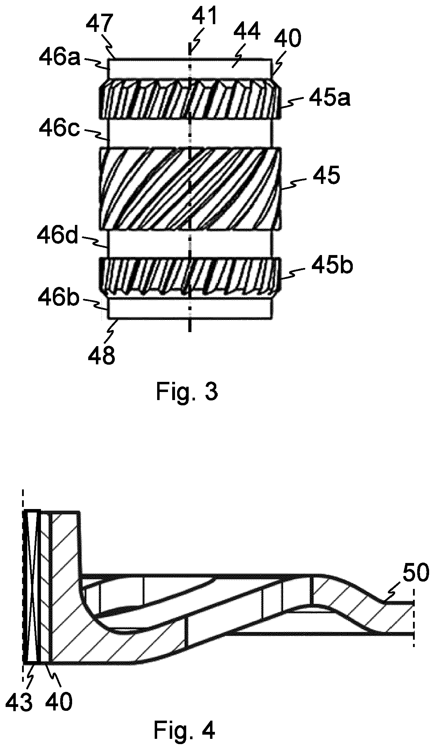

Fig. 3 is a side view of a tubular metal insert 40 that may be a component of the base plate 12. A viewing direction of Fig. 3 is perpendicular to the insert center axis 41. A The tubular metal insert 40 comprises an outer surface 44. The outer surface extends circumferentially around the insert center axis 41 extends from the first axial end 47 of the tubular metal insert 40 to the second axial end 48 of the tubular metal insert 40. The outer surface 44 of the tubular metal insert 40 may comprise at least one structured portion 45.

The outer surface 44 may comprise one or several structured portions, such as the structured portion 45, an optional second structured portion 45a and/or an optional third structured portion 45b. The outer surface 44 may comprise at least one cylindrical surface portion, such as a cylindrical end surface portion 46 a proximate the first axial end 47 of the tubular metal insert 40 and/or a further cylindrical end surface portion 46 be proximate the second axial end 48 of the tubular metal insert 40. The outer surface 44 may comprise at least one cylindrical intermediate surface portion that extends between adjacent structured portions. For illustration, the outer surface 44 may comprise a cylindrical intermediate surface portion 46 see that extends between the structured portion 45 and the second structured portion 45a. The outer surface 44 may comprise a further cylindrical intermediate surface portion 46d that extends between the structured portion 45 and the third structured portion 45b. The various structured portions and the cylindrical outer surface portions may respectively comprise continuously along an entire circumference around the insert center axis 41. Different structured portions may be distinguished from each other by an arrangement and/or geometry of structural feature is provided therein. For illustration, as schematically illustrated in Fig. 3, the different structured portions may respectively comprise grooves, with a groove pitch being different for at least two of the different structured portions 45, 45a, 45b.

The at least one structured portion 45, 45a, 45b may but does not need to comprise a grooved structured portion. The at least one structured portion 45, 45a, 45b may comprise at least one grooved, knurled, notched, polygonal surface portion or a combination of several of a grooved, knurled, notched, polygonal surface portion. Generally, the at least one structured portion 45, 45a, 45b contributes to providing a stable connection between the plastic plate 50 and the tubular metal insert.

Fig. 4 shows an enlarged partial view of the base plate 12. The tubular metal insert 40 comprises the internal thread 43 for threaded engagement with a mating external thread of the air dryer body. The plastic plate 50 may be overmolded onto the tubular metal insert 40. In this case, a material structure of the plastic plate 50 may remain substantially the same up to an interfaced between the plastic plate 50 and the tubular metal insert 40.

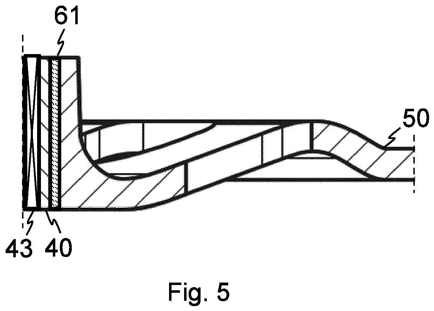

Fig. 5 shows an enlarged partial view of the base plate 12. The tubular metal insert 40 comprises the internal thread 43 for threaded engagement with a mating external thread of the air dryer body. The plastic plate 50 may be attached to the tubular metal insert 40 by means of an ultrasonic weld interface 61. At the ultrasonic weld interface 61, a material structure of the plastic plate 50 may be different from a material structure at, e.g., the outer annular ring portion 52. This is due to the fact that, when the plastic plate 50 and the tubular metal insert 40 are attached to each other by means of an ultrasonic welding process, the material of the plastic plate 50 is locally melted to performed to the outer surface 44 of the tubular metal insert. Thereby, the ultrasonic weld interface 61 can be detected in, and influences the characteristics of, the base plate 12 installed in the air dryer cartridge 10.

Other attachment techniques may be used to secure the tubular metal insert 40 and the plastic plate 50 to each other. The tubular metal insert 40 and the plastic plate 50 may be attached to each other such that they cannot be separated without causing irreversible damage to the plastic plate 50 and/or the tubular metal insert 40.

The structured portion or the structured portions 45, 45a, 45b on the outer surface 44 of the tubular metal insert 40, if present, improve securement of the tubular metal insert 42 the central tubular portion 54. More specifically, bonding between the inner surface 55 of the central tubular portion 54 of the plastic plate 50 and the outer surface 44 of the tubular metal insert 40 is enhanced thereby. This applies irrespective of whether the tubular insert 40 and the plastic plate 50 are joined by means of ultrasonic welding, by overmolding the plastic plate 50 onto the tubular metal insert 40, or by other techniques.

The base plate 12 formed of the plastic plate 50 and the tubular metal insert 40 secured within the central passage 60 of the plastic plate 50 may be used in association with a variety of different air cartridge configurations. The base plate 12 may be comprised by an air dryer cartridge 10 having a central gas inlet adjacent the central passage 60 of the plastic plate 50 (the gas inlet being the gas inlet during pumping mode operation). The plastic plate 12 may also be comprised by an air dryer cartridge 10 having a central gas outlet adjacent the central passage 60 of the plastic plate 50 (the gas outlet being the gas outlet during pumping mode operation).

Fig. 1 shows a configuration of the air dryer cartridge 10 in which the base plate 12 may be utilized in a particularly efficient manner. However, the base plate 12 may also be used in association with other air dryer cartridge configurations. The air dryer cartridge 10 comprises the desiccant container 20. The desiccant container 20 is a component that is separate and distinct from the plastic plate 50 in the air dryer cartridge 10 of Fig. 1. A seal 14, such as an O-ring seal 14, may be sandwiched between a desiccant container wall projection 25 of the desiccant container 20 and an outer surface of the central tubular portion 54 of the plastic plate 50. The desiccant container 20 comprises an outer desiccant container wall 22 extending cylindrically around the desiccant container axis 21. The desiccant container 20 further comprises a desiccant container end wall 24 extending between the receptacle 35 and the base plate 12 in a direction generally transverse to the desiccant container axis 21. A desiccant container lid 23 is secured to the outer desiccant container wall 22, by means of, for example, a form fit and/or force fit. For illustration, the outer desiccant container wall 22 may comprise an engagement structure 28 configured to engage with a mating engagement structure 29 on the desiccant container lid 23 to secure the desiccant container lid 23 on the outer desiccant container wall 22. The desiccant container 23 extends generally transverse to the desiccant container axis 21. The desiccant container end wall 24 comprises desiccant container gas passages 26. The desiccant container lid 23 comprises a further desiccant container gas passages 27. The outer desiccant container wall 22 is spaced from the outer cap 11 by a gap 34, which provides a gas flow channel along the gap 34.

When the air dryer cartridge 10 is configured such that the desiccant container gas passage 26 forms a gas outlet in pumping mode operation, there is an air flow in following sequence: compressed air flows from the air dryer body through the base plate 12, through the gap 34, through the further desiccant container gas passages 27, through the desiccant 30, and then through the desiccant container gas passages 26 towards the air dryer body. When the air dryer cartridge 10 is configured such that the desiccant container gas passage 26 forms a gas inlet in pumping mode operation, compressed air flows in the following sequence: air flows from the air dryer body through the desiccant container gas passages 26, through the desiccant 30, through the further desiccant container gas passages 27, and then through the gap 34 and through the base plate 12 towards the air dryer body.

The air dryer cartridge 10 may comprise material in the receptacle 35 of the desiccant container 20 that is different from the desiccant 30. For illustration, the air dryer cartridge 10 may comprise a filter material 32 and/or a separating member 33 interposed between the desiccant container end wall 24 and the desiccant 30. When the air dryer cartridge 10 is configured such that the desiccant container gas passages 26 forms a gas inlet in pumping mode operation, the filter material 32 may in particular comprise an oil filter. Thereby, the air dryer cartridge 10 is specifically configured for use in association with oil-lubricated compressors.

In additional embodiments, the air dryer cartridge 10 is configured such that the desiccant container 20 and the plastic plate 50 are integrally formed as a unitary molded piece. In this case, the O-ring seal 14 need not be provided. This air dryer cartridge provides particular ease of manufacture, as it obviates the need of assembling a desiccant container 20 separate from the plastic plate 50 in combination with the O-ring seal 14 during manufacture of the air dryer cartridge 10.

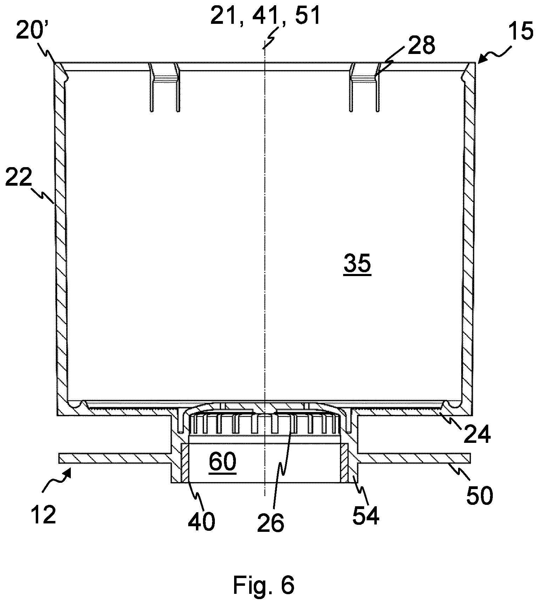

Fig. 6 shows a schematic cross-sectional view of a molded piece 15 that comprises both a desiccant container portion 20' and the plastic plate 50, combined in a single, unitary molded piece. The viewing direction in Fig. 6 is perpendicular to the desiccant container axis 21. The cross-sectional plane of Fig. 6 comprises the desiccant container axis 21. The plastic plate 50, which is part of the molded piece 15, has the central passage 60 in which the tubular metal insert 40 is secured to the central tubular portion 54 of the plastic plate 50. The plastic plate 50, which is part of the molded piece 15, in combination with the tubular metal insert 40 provides the base plate 12 of the air dryer cartridge 10. While Fig. 6 shows a schematic, simplified representation, the molded piece 15 may be performed in such a manner that the plastic plate 50 has any one or any combination of features discussed in association with Fig. 1, Fig. 2, Fig. 4, and Fig. 5.

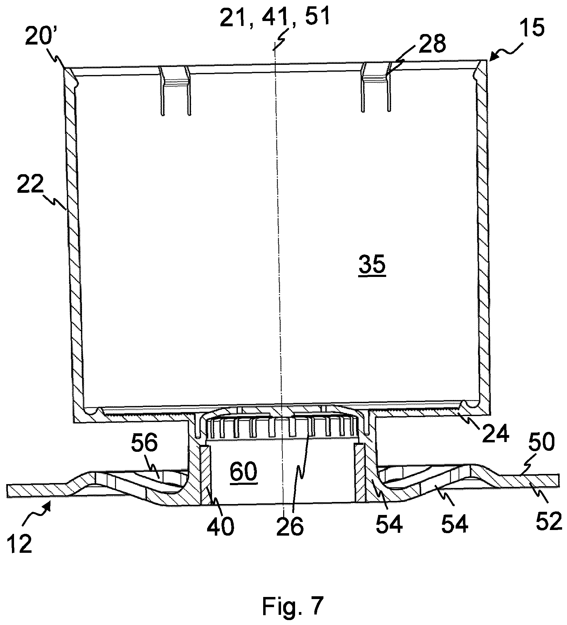

Fig. 7 shows a schematic cross-sectional view of a molded piece 15 that comprises both a desiccant container portion 20' and the plastic plate 50, combined in a single, unitary molded piece. The viewing direction in Fig. 6 is perpendicular to the desiccant container axis 21. The cross-sectional plane of Fig. 6 comprises the desiccant container axis 21. The plastic plate 50, which is part of the molded piece 15, has the central passage 60 in which the tubular metal insert 40 is secured to the central tubular portion 54 of the plastic plate 50. The plastic plate 50, which is part of the molded piece 15, in combination with the tubular metal insert 40 provides the base plate 12 of the air dryer cartridge 10. The molded piece 15 is configured such that it comprises the central tubular portion 54, the outer annular ring portion 52, and the transition portion 53, which may have a configuration and function as discussed in association with Fig. 1, Fig. 2, Fig. 4, and Fig. 5.

In an air dryer cartridge 10 comprising the molded piece 15 of Fig. 6 or Fig. 7, the tubular metal insert 40 may have any of the features discussed in association with Fig. 1, Fig. 2, Fig. 3, Fig. 4, and Fig. 5. In such an air dryer cartridge 10, no O-ring seal is provided between the plastic plate 50 and the desiccant container portion 20'.

In an air dryer cartridge 10 comprising the molded piece 15 of Fig. 6 or Fig. 7, the central tubular portion 54 of the plastic plate 50 may have an axial end of the central tubular portion 54 (shown at the lower side in Fig. 6 and Fig. 7) that is flush with an axial end (shown at the lower side in Fig. 6 and Fig. 7) of the tubular metal insert 40.

The molded piece 15 may be overmolded onto the tubular metal insert 40 to form the base plate 12 of the air dryer cartridge 10. The molded piece 15 and the tubular metal insert may be attached to each other by ultrasonic welding, creating the ultrasonic weld interface 61 in the part of the molded piece 15 that secures the tubular metal insert 40.

Various modifications may be implemented in further embodiments. For illustration, the engagement structure 28 and the mating engagement structure 29 need not be used. The desiccant container lid 23 may be attached to the outer desiccant container wall 22 by means of adhesive, by a friction fit, by means of fasteners or otherwise. The tubular metal piece 40 may be secured to the plastic plate 50 using adhesive or other techniques.

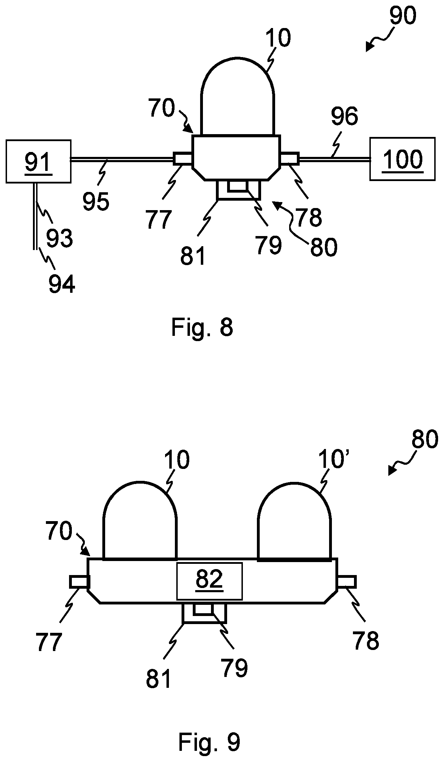

Fig. 8 is a schematic representation of a pneumatic system 90 comprising an air dryer 80. The air dryer 80 comprises the air dryer cartridge 10 according to an embodiment. The air dryer 80 comprises an air dryer inlet port 77, an air dryer outlet port 78, and an air dryer exhaust port 79. A silencer 81 may be provided at the air dryer exhaust port 79. The air dryer 80 is configured to communicate, via an internal conduit of the air dryer body 70, the air dryer inlet port 77 with the gas inlet of the air dryer cartridge 10. The air dryer 80 is configured to communicate via another internal conduit of the air dryer body 70, the gas outlet of the air dryer cartridge 10 with the air dryer outlet port 78. The air dryer 80 is configured to exhaust gas through the exhaust port 79, e.g., during regeneration.

The pneumatic system 90 comprises a compressor 91 that may be an oil-lubricated compressor or an oil-free compressor. The compressor 91 is configured to compress ambient air sucked in via an intake opening 94 that may be provided on an intake conduit 93. The intake conduit 93 may be directly connected to the compressor 91. The pneumatic system 90 comprises a supply line 95 directly or indirectly connected to the compressor 91 and the air dryer inlet port 77. The pneumatic system 90 comprises a consumer line 96 directly connected to the air dryer outlet port 78 and a pneumatic consumer system 100 that comprises one or several pneumatic consumers. The one or several pneumatic consumers may comprise any one or any combination of: an air supply system; a pneumatic levelling system; an electropneumatic levelling system; a pneumatic braking system; an electropneumatic braking system; a parking brake system; a sensor cleaning system, without being limited thereto.

The pneumatic system 90 is configured such that, in pumping mode operation, the compressor 91 provides compressed air to the air dryer 80, and the air dryer 80 provides the compressed air with reduced humidity to the pneumatic consumer system 100. The pneumatic system 90 may be configured such that, in regeneration mode operation, the compressor 91 can be stopped, the desiccant 30 is regenerated by a flow from the port 78 through the air dryer to the exhaust port 79, and the gas flow is exhausted through the exhaust port 79.

A technical effect provided by the air dryer cartridge 10 is that it provides reduced weight compared to a conventional air dryer cartridge construction and that it can be manufactured efficiently.

Fig. 9 is a schematic representation of an air dryer 80 configured as a dual cartridge air dryer 80. The air 80 dryer comprises the air dryer body 70. The air dryer 80 comprises an air dryer cartridge 10 threaded to the air dryer body 70. The air dryer 80 comprises a further air dryer cartridge 10' threaded to the air dryer body 70. The air dryer body 70 comprises a switching valve 82 configured to allow one of the air dryer cartridge 10 and the further air dryer cartridge 10' to be selected for drying air in pumping mode operation or for regeneration in regeneration mode operation.

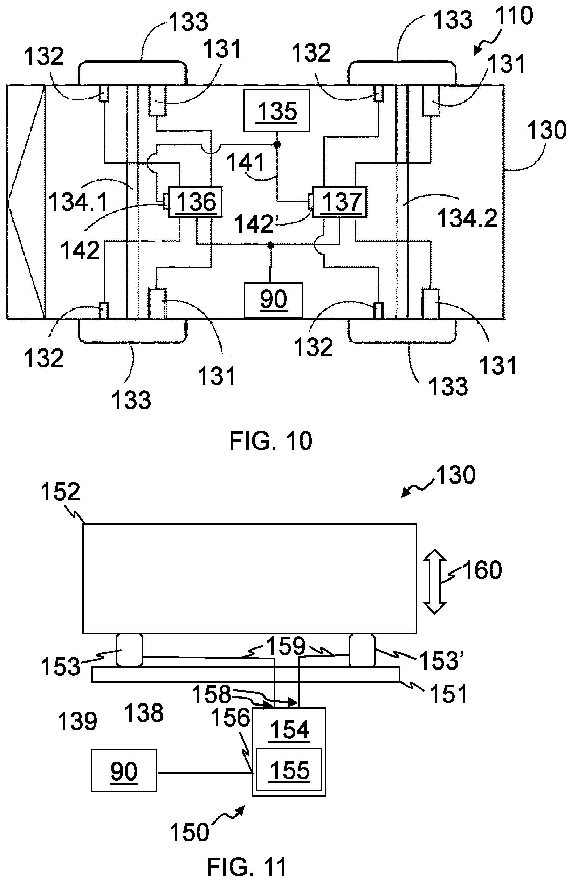

Fig. 10 shows a schematic representation of a vehicle 130 comprising a pneumatic system 110. The pneumatic system 110 may be configured as a braking system or electronic braking system (EBS). The pneumatic system 110 configured as a braking system or EBS comprises a front axle modulator 136 and/or a rear axle modulator 137. The vehicle 130 comprises a front axle 134.1 and a rear axle 134.2 or several rear axles. The vehicle 130 comprises several wheels 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 comprises at least one discharge port in fluid communication with brake cylinders 131 for front axle wheels. The rear axle modulator 137 comprises at least one further discharge port in fluid communication with brake cylinders 131 for rear axle wheels. The pneumatic system 110 comprises a supply system 90 that comprises at least one air dryer cartridge 10, optionally at least two air dryer cartridges 10, 10', according to an embodiment.

Fig. 11 is a schematic representation of a vehicle 130 which comprises a pneumatic vehicle system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 11). The electropneumatic control device 154 is configured to selectively energize the at least two solenoid valves 155 such that compressed air received at a compressed gas inlet 156 is supplied to one or both of the pneumatic adjusting element 153 and the further pneumatic adjusting element 153' and/or that one or both of the pneumatic adjusting element 153 and the further pneumatic adjusting element 153' is vented via an exhaust port of the electropneumatic control device 154. The electropneumatic control device 154 comprises several consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 comprises a supply system 90 that comprises at least one air dryer cartridge 10, optionally at least two air dryer cartridges 10, 10', according to an embodiment.

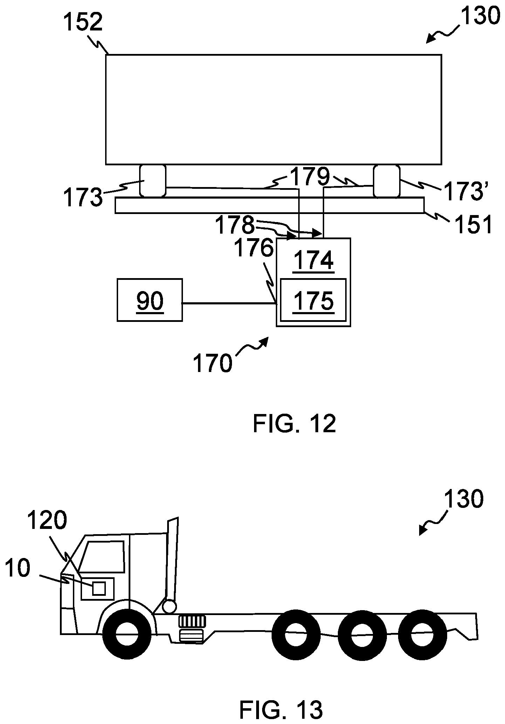

Fig. 12 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 12). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 comprises a supply system 90 that comprises at least one air dryer cartridge 10, optionally at least two air dryer cartridges 10, 10', according to an embodiment.

Fig. 13 shows a schematic representation of a vehicle 130 configured as a commercial vehicle. The commercial vehicle comprises at least one pneumatic system 120 (such as a gas supply system, a braking system, an EBS, a levelling system, and/or a shock-absorber system) comprising one or several air dryer cartridge(s) 10 according to an embodiment. The pneumatic system 120 may comprise any one or any combination of a supply system for supplying compressed air; a levelling system; a suspension system; a braking system.

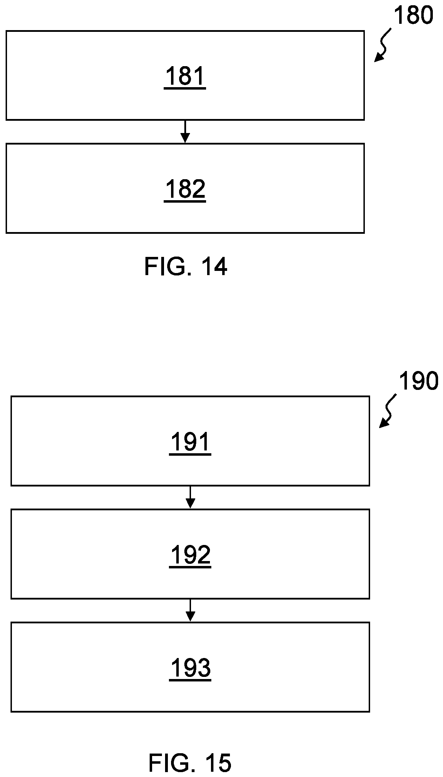

Fig. 14 is a flow chart of a method 180 of manufacturing an air dryer cartridge 10, e.g., for a pneumatic system 90, 110, 120, 150, 170 for a vehicle 130. The method 180 may be performed automatically by or using a manufacturing system.

The method 180 comprises a process block 181 of overmolding the plastic plate 50 onto the tubular metal insert 40 to form the base plate 12. The method 180 comprises a process block 182 of assembling the air dryer cartridge 10. Process block 182 may comprise assembling the base plate 12, the desiccant container 20, the O-ring seal, and the outer cap 11, with the desiccant 30 being inserted into the desiccant container 20.

Fig. 15 is a flow chart of a method 190 of manufacturing an air dryer cartridge 10, e.g., for a pneumatic system 90, 110, 120, 150, 170 for a vehicle 130. The method 190 may be performed automatically by or using a manufacturing system.

The method 190 comprises a process block 191 of molding the plastic plate 50. The method 190 comprises a process block 192 of attaching the plastic plate 50 and the tubular metal insert 40 to form the base plate 12. Process block 192 may comprise performing an ultrasonic welding operation to attach the plastic plate 50 and the tubular metal insert 40 to each other. The method 190 comprises a process block 193 of assembling the air dryer cartridge 10. Process block 193 may comprise assembling the base plate 12, the desiccant container 20, the O-ring seal, and the outer cap 11, with the desiccant 30 being inserted into the desiccant container 20.

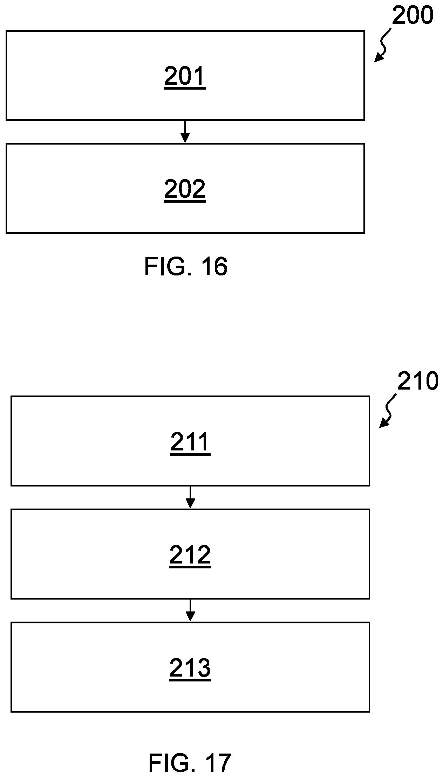

Fig. 16 is a flow chart of a method 200 of manufacturing an air dryer cartridge 10, e.g., for a pneumatic system 90, 110, 120, 150, 170 for a vehicle 130. The method 200 may be performed automatically by or using a manufacturing system.

The method 200 comprises a process block 201 of overmolding the molded body 15 comprising the plastic plate 50 and the desiccant container portion 20' onto the tubular metal insert 40. The method 200 comprises a process block 202 of assembling the air dryer cartridge 10. Process block 202 may comprise assembling the molded body 15 overmolded onto the tubular metal insert 40, the desiccant container lid 23, and the outer cap 11, with the desiccant 30 being inserted into the desiccant container portion 20'.

Fig. 17 is a flow chart of a method 210 of manufacturing an air dryer cartridge 10, e.g., for a pneumatic system 90, 110, 120, 150, 170 for a vehicle 130. The method 210 may be performed automatically by or using a manufacturing system.

The method 210 comprises a process block 211 of molding the molded body 15 comprising the plastic plate 50 and the desiccant container portion 20'. The method 210 comprises a process block 212 of attaching the plastic plate 50 of the molded body 15 and the tubular metal insert 40 to form the base plate 12. Process block 212 may comprise performing an ultrasonic welding operation to attach the plastic plate 50 and the tubular metal insert 40 to each other. The method 210 comprises a process block 213 of assembling the air dryer cartridge 10. Process block 213 may comprise assembling the molded body 15 having the tubular metal insert 40 secured thereto, the desiccant container lid 23, and the outer cap 11, with the desiccant 30 being inserted into the desiccant container portion 20'.

According to further embodiments, a method of assembling an air dryer for a pneumatic system 110, 120, 150, 170 comprises manufacturing the air dryer cartridge 10 using any one of the manufacturing methods 180, 190, 200, 210, and assembling the air dryer cartridge 10 to the air dryer body 70.

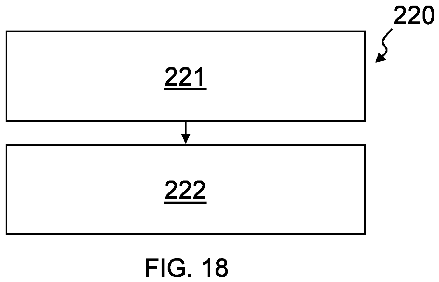

Fig. 18 is a flow chart of a method 220 of providing gas to at least one pneumatic consumer of a vehicle (e.g., of a commercial vehicle 130).

The method comprises a process block 221 of receiving a gas flow by the air dryer 80 which comprises the air dryer cartridge 10.The method 220 comprises a process block 222 of passing, in pumping mode, the gas flow through the desiccant 30 contained in the desiccant container 20 of the air dryer cartridge 10 to provide the gas flow to the at least one pneumatic consumer.

While embodiments have been described with reference to the drawings, modifications and alterations may be implemented in other embodiments.

For illustration, while embodiments have been described in association with dual cartridge air dryers, the invention is not limited to dual cartridge air dryers. For further illustration, while embodiments have been described in which the plastic plate 50 and the tubular metal insert 40 are attached by means of overmolding or ultrasonic welding, other techniques may be used. For further illustration, while geometrical features of the plastic plate were discussed herein and are illustrated in the drawings, various other geometries of the plastic plate 50 may be implemented in further embodiments. For still further illustration, while the tubular metal insert may comprise one or several structured surface portions comprising grooves on its outer surface that may comprise, the one or several structured surface portions may alternatively or additionally comprise at least one grooved, knurled, notched, polygonal surface portion or a combination of several of a grooved, knurled, notched, polygonal surface portion, without being limited thereto.

Various effects and advantages are attained by embodiments of the invention. Embodiments provide improved air dryer components that allow the weight of the base plate of an air dryer cartridge to be reduced while allowing the base plate to be manufactured efficiently.

### List of Reference Numerals (part of the description)

- 10: air dryer cartridge
- 10': further air dryer cartridge
- 11: outer cap
- 12: base plate
- 13: bias member
- 14: air dryer cartridge seal
- 15: molded piece
- 20: desiccant container
- 20': desiccant container portion
- 21: desiccant container axis
- 22: outer desiccant container wall
- 23: desiccant container lid
- 24: desiccant container end wall
- 25: desiccant container wall projection
- 26: desiccant container gas passage
- 27: further desiccant container gas passage
- 28: engagement structure
- 29: mating engagement structure
- 30: desiccant
- 31: circumferential gap
- 32: filter
- 33: separating member
- 34: gap
- 35: receptacle
- 39: extension plane
- 40: tubular metal insert
- 41: insert center axis
- 42: inner surface of tubular metal insert
- 43: internal thread
- 44: outer surface of tubular metal insert
- 45: structured portion
- 45a: second structured portion
- 45b: third structured portion
- 46a: cylindrical end surface portion
- 46b: further cylindrical end surface portion
- 46c: cylindrical intermediate surface portion
- 46d: further cylindrical intermediate surface portion
- 47: first axial end of tubular metal insert
- 48: second axial end of tubular metal insert
- 50: plastic plate
- 51: center axis of central tubular portion
- 52: outer annular ring portion
- 53: transition portion
- 53a: curved section
- 53b: inclined section
- 53c: further curved section
- 54: central tubular portion
- 55: inner surface of central tubular portion
- 56: air flow passage
- 57: first axial end of central tubular portion
- 58: second axial end of central tubular portion
- 59: outer rim
- 60: central passage
- 61: ultrasonic weld interface
- 70: air dryer body
- 77: air dryer inlet port
- 78: air dryer outlet port
- 79: air dryer exhaust port
- 80: air dryer
- 81: silencer
- 82: switching valve
- 90: pneumatic system
- 91: compressor
- 93: intake conduit
- 94: intake opening
- 95: supply line
- 96: consumer line
- 100: pneumatic consumer system
- 110: pneumatic system
- 120: pneumatic system
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192, 193: process blocks
- 200: method
- 201, 202: process blocks
- 210: method
- 211, 212, 213: process blocks
- 220: method
- 221, 222: process blocks

## Claims

1. An air dryer cartridge (10), comprising:
a desiccant (30); and
a base plate (12), comprising:
a fixing structure (40) configured to affix the air dryer cartridge (10) on an air dryer body (70), and
air flow passages (56) configured to provide an air flow path between the air dryer body (70) and the desiccant;
wherein the base plate (12) comprises a plastic plate (50) comprising a central passage (60) and a tubular metal insert (40) received in the central passage (60),
wherein the fixing structure (40) comprises the tubular metal insert (40).

2. The air dryer cartridge (10) of claim 1, wherein the tubular metal insert (40) comprises an internal thread (43).

3. The air dryer cartridge (10) of claim 2, wherein the tubular metal insert (40) comprises an outer insert surface (44) comprising at least one structured portion (45, 45a, 45b) spaced from the internal thread (43).

4. The air dryer cartridge (10) of any one of claims 1 to 3, wherein the plastic plate (50) is overmolded on the tubular metal insert (40).

5. The air dryer cartridge (10) of any one of claims 1 to 3, wherein the base plate (12) comprises an ultrasonic weld interface (61) between the tubular metal insert (40) and the plastic plate (50).

6. The air dryer cartridge (10) of any one of the preceding claims, wherein the plastic plate (50) is a molded piece (50).

7. The air dryer cartridge (10) of any one of the preceding claims, wherein the plastic plate (50) comprises:
a central tubular portion (54) extending coaxially with the tubular metal insert (40) and comprising the central passage (60);
an outer annular ring portion (52) extending in a plane (39) perpendicular to a center axis (51) of the central tubular portion (54); and
a transition portion (53) extending from the outer annular ring portion (52) to the central tubular portion (54), the transition portion (53) comprising at least one section (53a, 53b, 53c) that is inclined or curved relative to the plane (39) perpendicular to the center axis (51) of the central tubular portion (54), the transition portion (53) comprising at least one of the air flow passages (56).

8. The air dryer cartridge (10) of any one of the preceding claims, further comprising:
a desiccant container (20; 20') defining a receptacle (35) in which the desiccant (30) is contained; and
a seal sandwiched between the desiccant container (20; 20') and the plastic plate (50).

9. The air dryer cartridge (10) of any one of claims 1 to 7,
wherein the plastic plate (50) is comprised by a molded piece (15), wherein the molded piece (15) further comprises a tubular container wall (22) integral with the plastic plate (50) to define a receptacle (35) in which the desiccant (30) is contained.

10. The air dryer cartridge (10) of claim 9, wherein the molded piece (15) is configured to pneumatically interface with the air dryer body (70) and wherein the molded piece (15) is in direct contact with at least one of:
the desiccant (30);
a filter material (32).

11. A molded piece (15) for an air dryer cartridge (10), in particular for the air dryer cartridge (10) of claim 9 or claim 10, the molded piece (15) being formed of a plastic material and comprising:
a desiccant container portion (21) comprising an end wall (24) and a tubular container wall (22) extending around a desiccant container axis (21); and
a plastic plate (50) extending transverse to the desiccant container axis (21) and configured to pneumatically interface with an air dryer body (70).

12. An air dryer (80), comprising:
an air dryer body (70); and
the air dryer cartridge (10) of any one claims 1 to 10, wherein the air dryer cartridge (10) is configured to be affixed to the air dryer body (70) in a destruction free reversible manner.

13. A vehicle (130), comprising a pneumatic system (90, 110, 120, 150, 170), the pneumatic system (90, 110, 120, 150, 170) comprising the air dryer cartridge (10) of any one of claims 1 to 10, the molded piece (15) of claim 11, or the air dryer (80) of claim 12.

14. A method of manufacturing an air dryer cartridge (10), the method comprising:
manufacturing a base plate (12) of the air dryer cartridge (10), comprising molding a plastic plate (50) comprising a central passage (60), wherein the plastic plate (50) comprises air flow passages (56) configured to provide an air flow path between an air dryer body (70) and a desiccant (30), and wherein a tubular metal insert (40) is secured in the central passage (60); and
assembling the base plate (12) to form the air dryer cartridge (10).

15. The method of claim 14,
wherein molding the plastic plate (50) comprises overmolding the plastic plate (50) on the tubular metal insert (40); or
wherein the method further comprises performing an ultrasonic weld operation to secure the tubular metal insert (40) in the central passage (60) of the plastic plate (50).
